# EUROPEAN PATENT APPLICATION

(11) **EP 4 238 632 A1**
(43) Date of publication of application: **06.09.2023**
(21) Application number: 22159991.3
(22) Date of filing: 03.03.2022
(51) Int. Cl.: B01D 53/22, C10L 3/10

(54) **FLARE GAS CAPTURE AND PROCESSING**

(71) Applicant: Grant Prideco, Inc., Wilmington, DE 19801 (US)
(72) Inventor: SAIDANI, Nizar, FR-94130 Nogent Sur Marne (FR)
(74) Representative: Onsagers AS

(57) **Abstract**

The invention concerns a flare gas recovery system comprising a flare gas source suitable for discharging a multi-phase stream including materials in two or more thermodynamic phases such as natural gas (NG), natural gas liquids (NGLs) and/or water, a separator suitable for separating thermodynamic phases of an incoming fluid, an ejector configured to increase the pressure of the multi-phase stream and a membrane system configured to further separate gaseous fluid discharged from the separator. The invention also concerns a method using such a flare gas recovery system.

## Description

### Technical Field

The present invention relates to a flare gas recovery system and a method for recovering flare gas using such a flare recovery system.

### Background and prior art:

Flare Gas Recovery Systems (FGRS) aim to recover and repurpose gasses and emissions, such as methane/LPGs and sulfur dioxide, that would normally be burned during the flaring process.

Vented and flared gas are the main contributors to greenhouse gas (GHG) released in the atmosphere. Their reduction is one of the challenges facing the oil and gas industry. Despite the fact that the recovered gas is offering a supplementary source of income for oil and gas companies, appropriate gas recovery systems are often not installed due to high investment costs and site limitations such as availability of energy necessary to run electric motors driving compressors and/or footprints required for such systems.

Various systems for minimizing flaring are known in the field.

An example of a prior art FGRS is disclosed in WO 2019/199432 A1. Flare gas (suction gas) from a flare header is guided into an ejector at low pressure where it is mixed with an anime solvent (motive fluid) at higher pressure. The discharged fluid, i.e. a two-phase mixture of flare gas and anime solvent at intermediate pressure, is guided into a separator which separates the mixture into a vapor phase and a liquid phase. The latter is recirculated back to the ejector as motive fluid after being processed in a sweetening unit.

Another example of a prior art system that may be used in flare gas recovery is disclosed in US 2015/0174524 A1 where ejector recycling is used in a gas separation process in combination with a second separation stage based on membrane technology.

Ejectors rely on a Venturi effect to pressurize flare gas by utilizing available pressure from a motive fluid. Ejectors are considered static equipment and are generally associated with low capital and operating costs in comparison to compressors. The ejector converts the pressure energy available in the motive fluid to velocity energy, brings in the low pressure suction fluid, mixes the two fluids, and discharges the mixture at an intermediate pressure without the use of rotating or moving parts.

A liquid-driven ejector may be integrated with a flare gas recovery system. Such systems require separation of the liquid and vapor phases downstream of the ejector.

However, the advantage of liquid-driven ejectors is that the liquid, for example water, may be pumped and recycled as motive fluid, resulting in a net discharge of only the recovered flare gas, thus causing less impact on downstream units.

This invention allows for an installation having a smaller footprint compared to prior art systems. Furthermore, the invention reduces the overall cost of both installation and operation.

In case of wellheads that are far from processing plants or a collection pipes, the invention also offers a reliable mobile solution that can allow the oil and gas companies to recover the gas as Compressed Natural Gas (CNG) gas and valorize it.

Flare gas typically contains a mixture of several gases and liquids, primarily natural gas (NG) and natural gas liquids (NGLs). Natural gas typically comprises 50-90% lighter hydrocarbons with one or two carbons, such as methane or ethane, while natural gas liquids typically comprises hydrocarbons with three to five carbons, including propane, iso-butane/butane and pentane [see e.g. report "Best Available Techniques Economically Achievable to Address Black Carbon from Gas Flaring", EU Action on Black Carbon in the Arctic - Technical Report 3, 31.05.2019].

An objective of the present invention is to provide a flare gas recovery system which require a smaller footprint than at least some of the prior art solutions.

Another objective of the present invention is to provide a flare gas recovery system having a reduced need for spare parts compared to at least some of the prior art solutions.

Yet another objective of the present invention is to provide a flare gas recovery system having a lower capital expenditure (CAPEX) compared to at least some of the prior art solutions.

Yet another objective of the present invention is to provide a compact flare gas recovery system which may be transported by vehicles such as trucks.

### Summary of the invention

The invention is set forth in the independent claims and the dependent claims describe certain optional features of the invention.

In a first aspect, the invention concerns a flare gas recovery system comprising a flare gas source suitable for discharging a multi-phase stream including materials in two or more thermodynamic phases such as natural gas (NG), natural gas liquids (NGLs) and/or water, a separator suitable for separating, at least partly, and preferably fully, thermodynamic phases of an incoming fluid and an ejector configured to increase the pressure of the multi-phase stream.

The separator comprises a separator inlet, a first separator outlet suitable for discharging a motive fluid separated from a mixed stream entering the separator and a first stage outlet suitable for discharging a first stage fluid separated from the mixed stream. The mixed stream may be identical to the multi-phase stream or mixed with a fluid returning from the separator (see below). The motive fluid may be a liquid such as water or mostly water. Moreover, the first stage fluid has a chemical composition different from the motive fluid and may comprise a mixture of natural gas(es) and natural liquid(s).

The ejector is of type liquid-driven ejector and comprises a motive fluid inlet configured to receive the motive fluid discharged from the first separator outlet of the separator at a motive fluid pressure *P_{mf,}* a mixed stream inlet in fluid communication with the flare gas source, and preferably also the first stage outlet, and an ejector outlet in fluid communication with the separator inlet.

In a preferred embodiment of the invention, the mixed stream inlet is configured to receive a mixed stream comprising the multi-phase stream and the first stage fluid at an initial pressure *Pᵢ* lower than the motive fluid pressure *P_{mf}.*

Furthermore, the ejector outlet is configured to discharge fluid comprising a mixture of the motive fluid and the mixed stream at an outlet pressure *Pₒ* being between the inlet pressure *Pᵢ* of the mixed stream at the mixed stream inlet and the motive fluid pressure *P_{mf}* at the motive fluid inlet.

The flare gas recovery system further comprises a motive fluid recirculation pump configured to raise the pressure of the motive fluid to the motive fluid pressure *P_{mf}* at the motive fluid inlet and a membrane system in fluid communication with the first stage gas outlet. A pump of type variable speed drive (VSD) may be used. The mixed stream and the motive fluid may hence be alternatively referred so as a low pressure stream and the high pressure stream, respectively, wherein the low pressure stream may either be the multi-phase stream discharged from the flare gas source or a mixture of the multi-phase stream and a return fluid discharged from the separator.

The membrane system may comprise a membrane configured to at least partly separate a gas fraction and a liquid fraction of the first stage fluid, a second stage gas outlet arranged on a gas side of the membrane for discharging the gas fraction and a second stage liquid outlet arranged on a liquid side of the membrane for discharging the liquid fraction. The gas fraction may be natural gas(es) and the liquid fraction may be natural gas liquid(s).

In a preferred embodiment, the membrane system is configured such the membrane inlet is in fluid communication with the gas side of the membrane and further that the membrane allows permeation of the liquid fraction of the first stage fluid into the liquid side.

Natural gas is hereinafter defined as a flammable hydrocarbon gas mixture which at least comprises methane.

Also note that the initial pressure *Pᵢ* is herein the total pressure of the fluids from both the flare gas source and the part of the first stage fluid not flowing to the membrane system.

The use of a recirculation pump instead of a compressor results in several advantageous. Compared to compressors, the cost of spare parts and repair of pumps of the type suitable for the inventive system is low. A pump-based system also provides for a smaller footprint, typically 30-50 % less than a traditional compressor-based system. Furthermore, it is more mobile, both due to smaller footprint and less vibrations, thereby facilitating operations at different remote sites.

In an exemplary configuration, the system further comprises a motive fluid valve configured to control flow of the motive fluid to the motive fluid inlet of the ejector. The motive fluid valve may for example be arranged between a motive fluid pump outlet of the motive fluid recirculation pump and the motive fluid inlet.

The motive fluid valve is preferably controllable. Moreover, the system may further comprise a level controller configured to sense a level of liquids inside the separator that may be used as motive fluid and to send an instruction signal to the motive fluid valve with instruction to regulate the flow of the motive fluid to or towards the desired motive fluid pressure *P_{mf}* based on the sensed motive fluid level, thereby enabling control of the flow of motive fluid into the ejector based on the liquid level. The measured level of the motive fluid is typically the interface layer between water and condensate liquid.

In general, the level controller may measure the interface layer between a higher density fluid such as water and a lower density fluid such as hydrocarbons and/or gas Alternatively, or in addition, the motive fluid recirculation pump may be controllable. In this case, the system may further comprise the above mentioned level controller which is configured to send an instruction signal to the motive fluid recirculation pump with instruction to regulate the flow of the motive fluid to or towards the desired motive fluid pressure *P_{mf}* based on the sensed motive fluid level. As for the configuration with the controllable motive fluid valve, the configuration with the controllable pump enables better control of the flow of motive fluid into the ejector based on the liquid level.

Said level controller(s) may for example be configured to regulate the pressure *P_{mf}* at the motive fluid inlet relative to the pressure *Pᵢ* at the mixed stream inlet.

Said level controller(s) is preferably configured to regulate the absolute pressure *P_{mf,abs}* at the motive fluid inlet to be at least 100 times the absolute pressure *P_{i,abs}* at the mixed stream inlet, thereby ensuring sufficiently high efficiency of the membrane system.

More preferably, said level controller(s) is configured to regulate the absolute pressure *P_{mf,abs}* at the motive fluid inlet to be at least 125 times the absolute pressure *P_{i,abs}* at the mixed stream inlet, thereby ensuring sufficiently high efficiency of the membrane system.

Alternatively, or in addition, said level controller(s) may be configured to regulate the motive fluid gauge pressure *P_{mf}* to a pressure level being sufficient to reach a final desired pressure in the separator. Such final pressure is preferably at least 6 bar, more preferably at least 10 bar, even more preferably at least 12 bar, for example 15 bar.

In another exemplary configuration, the system further comprises a back-flow valve configured to control a flow of the first stage fluid from the first stage gas outlet to the mixed stream inlet.

The back-flow valve is preferably programmable. Moreover the system may further comprise a process variable controller configured to sense one or more process variables of the flow of the multi-phase stream from at least the flare gas source to the mixed stream inlet, wherein the process variables comprises at least one of a temperature, a pressure and a flow rate. Further, the process variable controller may be configured to send an instruction signal to the back-flow valve with instruction to regulate the flow of the first stage fluid to achieve the desired input pressure *Pᵢ* based on the sensed process variable(s).

The process variable controller and the level controller is preferably mutually configured to regulate at least one of the back-flow valve, the motive fluid recirculation pump and the motive fluid valve during operation such that, when referring to absolute pressures, the motive fluid pressure *P_{mf,abs}* is at least 120 times larger than the inlet pressure *P_{i,abs}.*

More preferably, the process variable controller and the level controller is mutually configured to regulate at least one of the back-flow valve, the motive fluid recirculation pump and the motive fluid valve during operation such that, when referring to absolute pressures, the motive fluid pressure *P_{mf}* is at least 120 times larger than the inlet pressure *P_{i,abs}.*

Alternatively, when referring to absolute pressures, the process variable controller and the level controller may be mutually configured to regulate at least one of the back-flow valve, the motive fluid recirculation pump and the motive fluid valve during operation such that a membrane pressure *P_{m,abs}* present at the inlet of the membrane system is at least 11 bar, more preferably at least 12 bar, even more preferably at least 13 bar.

Alternatively, when referring to absolute pressures, the process variable controller and the level controller may be mutually configured to regulate at least one of the back-flow valve, the motive fluid recirculation pump and the motive fluid valve during operation such that a membrane pressure *Pₘ* present at the inlet of the membrane system is at least 12 bar, more preferably at least 13 bar, even more preferably at least 14 bar.

In yet another exemplary configuration, the separator further comprises at least one second separator outlet for discharging at least one second fluid separated from the mixed stream, wherein the second fluid has a thermodynamic phase different from the motive fluid and the first stage fluid.

The first stage fluid typically comprises one or more liquid hydrocarbon compounds (hydrocarbons).

Said at least one second separator outlet may comprise a liquid hydrocarbon outlet for discharging liquid hydrocarbons separated from the mixed stream, for example heavy hydrocarbons in liquid form. One definition of heavy hydrocarbons may be any hydrocarbons except methane and ethane. Another definition of heavy hydrocarbons may be any hydrocarbons with a chemical composition involving more than 3 carbon atoms.

Furthermore, the at least one second separator outlet may comprise a drainage outlet for draining water separated from the mixed stream.

Furthermore, the separator may comprise at least one make-up water inlet for guiding make-up water into the separator from a make-up water unit to compensate for losses.

In yet another exemplary configuration, the system further comprises a cooler for cooling the motive fluid discharged from the separator prior to entering the ejector. The cooler may for example be one or more heat exchangers. The cooling of the motive fluid may also be achieved by use of drainage water discharged into the drainage line and/or make-up water entering the separator. Supply of cooling water from an external water reservoir is also possible.

In yet another exemplary configuration, the system further comprises a second membrane system in fluid communication with the gas fraction outlet of the membrane system.

The second membrane system may comprise a second membrane configured to further separate at least partly a residual liquid fraction from the gas fraction, a third stage gas outlet arranged on a gas side of the second membrane for discharging a remaining gas fraction after separation by the second membrane and a third stage liquid outlet arranged on a liquid side of the second membrane for discharging the residual liquid fraction.

In yet another exemplary configuration, the system further comprises a pressure relief valve coupled (directly or indirectly) to the separator to maintain the pressure within the separator below a threshold pressure. The threshold pressure is typically the maximum operational design pressure of the separator, for example 30 bar gauge.

In yet another exemplary configuration, the system further comprises a separator pressure sensor configured to measure the pressure within the separator, and preferably at the upper, gaseous part of the separator.

In yet another exemplary configuration, the system further comprises a second stage gas pressure sensor configured to measure the pressure downstream the second stage gas outlet. In conjunction with the separator pressure sensor, the second stage pressure sensor allows continuous and/or regular monitoring of the pressure difference across the membrane system, which again allows for detecting any operational changes such as degradations.

In a second aspect, the invention concerns a method suitable for recovering flare gas by use of a flare recovery system in accordance with the system described above.

The method comprises the following steps (preferably in sequence):
A: passing the mixed stream discharged from the ejector into the separator via the separator inlet;
B: separating the mixed stream into the motive fluid and the first stage fluid with the separator;
C: passing the motive fluid into the ejector via the first separator outlet and the motive fluid inlet while operating the motive fluid recirculation pump to maintain a pressure at the motive fluid inlet of at least the gauge motive fluid pressure *P_{mf,},* wherein the motive fluid pressure *P_{mf}* is preferably regulated such that separation of the gas fraction and the liquid fraction may occur at an acceptable efficiency, preferably an efficiency rate of at least 95 %, more preferably at least 97 % or even more preferably at least 99 %;
D: optionally passing the multi-phase stream discharged from the flare gas source into the ejector via the mixed stream inlet;
E: discharging the first stage fluid from the separator via the first stage outlet;
F: passing at least a fraction of the first stage fluid discharged from the separator into the membrane system via one or more membrane inlets;
G: passing, if any, a remaining fraction of the first stage fluid discharged from the separator into the ejector, preferably via the mixed stream inlet,
H: separating the at least fraction of the first stage fluid into a second stage gas and a second stage liquid by letting the at least fraction of the first stage fluid penetrate through the membrane;
I: discharging the second stage gas via the second stage gas outlet arranged on one side of the membrane;
J: discharging the second stage liquid via the second stage liquid outlet arranged on the side of the membrane opposite of the second stage gas outlet; and
K: controlling the gauge motive fluid pressure *P_{mf}* by regulating at least the motive fluid recirculation pump to a pressure allowing separation of the second stage gas and the second stage liquid within the membrane system, for example to an efficiency ratio as mentioned in step C. The efficiency ratio may be measured by for example use of a mass spectrometer.

Note that the efficiency ratio may also depend on the design (sizing, shape, inlet device, and demisting) of the separator.

In an exemplary method of the second aspect, a ratio between the fraction of the first stage fluid entering the membrane system and the remaining fraction entering the ejector is regulated by one or more back-flow valves. By controlling the ratio, the pressure of the remaining fraction of the first stage fluid is controlled, and hence also the inlet pressure *Pᵢ*. The back-flow valve(s) may be arranged between the mixed stream inlet and the location of the fluid path wherein the first stage fluid is split into the fraction going into the membrane system and the remaining fraction going into the ejector.

In another exemplary method of the second aspect, step K further comprises regulating/throttling one or more motive fluid valves configured to control flow of the motive fluid to the motive fluid inlet of the ejector. As for the first aspect, the motive fluid valve(s) may for example be arranged between a motive fluid pump outlet of the motive fluid recirculation pump and the motive fluid inlet.

In yet another exemplary method of the second aspect, the absolute motive fluid pressure *P_{mf,abs}* is adjusted to, and maintained at, an absolute pressure being at least 120 times the absolute inlet pressure *P_{i,abs}.*

The gauge motive fluid pressure *P_{mf}* is may be set to a pressure of at least 100 bar, for example in range 100-200 bar. The gauge inlet pressure *Pᵢ* may be set to a pressure of at least 0.1 bar.

In yet another exemplary method of the second aspect, the motive fluid pressure *P_{mf}* and the inlet pressure *Pᵢ* is adjusted to, and maintained above, a minimum pressure that ensures efficient separation of hydrocarbon(s) and water from the gas(es), as well as efficient performance of the downstream membrane. For example, the gauge pressure levels *P_{mf}* and *Pi* may be set to ensure that the gauge outlet pressure *Pₒ* remains above 8 bar.

In yet another exemplary method of the second aspect, the system further comprises
- a flare line valve configured to stop flow of the multi-phase stream A from the flare gas source,
- a pressure relief valve coupled to the separator to maintain the pressure within the separator below a threshold pressure and
- a separator pressure sensor configured to measure the pressure within the separator, wherein, in case the separator pressure sensor measures a pressure above the threshold pressure, the method further comprises
- sending (directly or indirectly) a command signal to the pressure relief valve with instruction to activate and
- closing the flare line valve.

In yet another exemplary method of the second aspect, the step of controlling the absolute motive fluid pressure *P_{mf,abs}* is performed such that a pressure ratio between the absolute outlet pressure *P_{o,abs}* and the absolute inlet pressure *P_{i,abs}* is at least 6, more preferably at least 8, even more preferably at least 10, even more preferably at least 12, even more preferably at least 15, for example between 15 and 16. Moreover, at a maximum operating pressure at or below the threshold pressure, a command signal may be sent (directly or indirectly) to the recirculation pump at the same time or immediately after closing the flare line valve, instructing the recirculation pump to shut down.

In addition, or alternatively, at a maximum operating pressure at or below the threshold pressure, a command signal may be sent (directly or indirectly) to the motive fluid valve at the same time or immediately after closing the flare line valve , instructing the motive fluid valve to close.

The command signal may be sent directly from the separator pressure sensor to the pressure relief valve or via a separate control system or an integrated control system.

All of the above-mentioned method steps may be fully or partly automized by use of a common control system.

In a preferred exemplary configuration, all command signals sent to or from controllable components of the flare gas recovery system described above go via a common control system such as a programmable logic controller (PLC).

For example, in order to improve quality of control of at least one of the motive fluid pressure or the separator pressure, the flare gas recovery system may include a primary controller (pressure control loop) and a secondary controller (level control loop) which act on at least one of the motive fluid recirculation pump and the motive fluid valve, wherein the primary controller comprises the separator pressure sensor and at least one of the motive fluid recirculation pump and the motive fluid valve, and wherein the secondary controller comprises the level controller and at least one of the motive fluid recirculation pump and the motive fluid valve. Hence, in the event of a disturbance in the flow from the flare gas source, a control process is activated by the change of level within the separator by the secondary controller before any activation due to change in pressure by the primary controller. A higher/improved overall control of the system is thus achieved.

### Brief description of the drawings

The following drawings depict alternatives of the present invention and are appended to facilitate the understanding of the invention. However, the features disclosed in the drawings are for illustrative purposes only and shall not be interpreted in a limiting sense.
Fig. 1 is a schematic drawing of an embodiment of a flare gas recovery system in accordance with the invention.
Fig. 2 is a schematic drawing of a multi-stage membrane system suitable for use in a flare gas recovery system in accordance with the invention.
Fig. 3 is a schematic drawing of another embodiment of the flare gas recovery system in accordance with the invention.

### Detailed description of the invention

In the following, different alternatives will be discussed in more detail with reference to the appended drawings. It should be understood, however, that the drawings are not intended to limit the scope of the invention to the subject-matter depicted in the drawings. Furthermore, even if some of the features are described in relation to the system only, it is apparent that they are valid for the method as well, and vice versa.

The invention set forth a new system and a new method to recover and valorize flare gas(es) in e.g. refineries, wellheads and process plants producing and/or handling flare gases.

The system and the related method involve flare gas recovery and primary compression using an ejector / ejector system 2, preferably with water, or a liquid with a density similar to water, as motive fluid.

The system and the related method further involve using one or more membrane systems 7,7a,7b for carrying out fluid valorization.

The system and the related method may also involve hydrocyclone separators to catch any hydrocarbon liquids susceptible to provoke a foam.

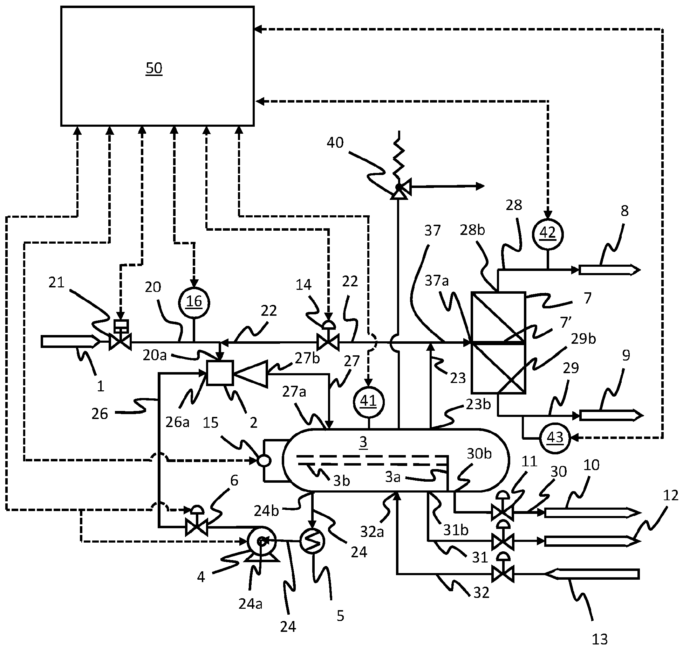

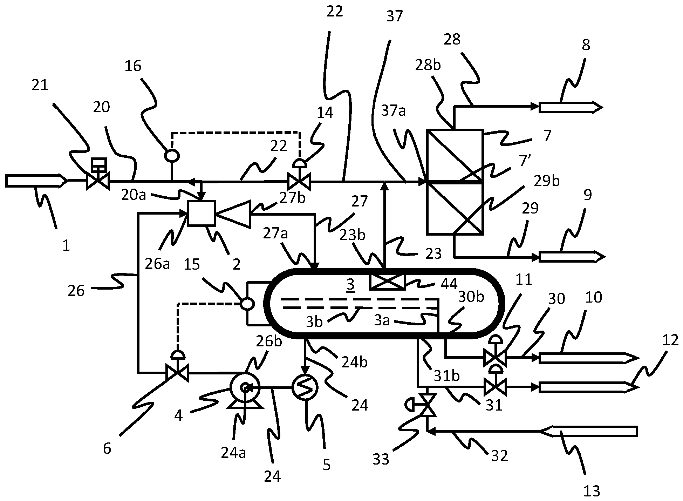

Different embodiments of the invention are shown schematically in Figs. 1 and 3. A flare gas source / flare header 1 discharges flare gases / flare fluids which are guided into a liquid ejector 2 via an ejector inlet 20a. The flow of the flare gas takes place within a flare line 20 set in fluid communication with the flare header 1 at one end and the ejector inlet 20a at the opposite end. The flare gas flowing within the flare line 20 may be controlled by a valve 21 such as an *XY* Valve, for example an emergency shutdown (ESD) valve. The valve 21 may be operated by solenoids and/or manually.

Further, a typical pressure and a typical temperature of the flare gas discharged from the flare header 1 into the flare line 20 is 0.2 bar and 40°C, respectively.

Note that the pressure is hereinafter measured in relation to the atmosphere. Hence a pressure of 1 bar corresponds to an absolute pressure of 2 bar.

The flare gas is mostly composed of methane. But variable quantities of other hydrocarbons such as ethane and other gases and/or liquids may be present. For example, the flare gas may have the following composition molar fractions:

| | |
|---|---|
| Methane: | 0.58 |
| Propane: | 0.15 |
| Ethane: | 0.14 |
| n-Butane: | 0.05 |
| i-Butane: | 0.03 |
| Nitrogen: | 0.02 |
| i-Pentane: | 0.02 |
| n-Pentane: | 0.01 |
| Water: | 0.01 |

The flare gas is guided into a separator 3 via a separator inlet 27a. The separator 3 is typically a 3-phase separator comprising one or more overflow plates (also called weir plates) 3a. Interface layers 3b between fluids at different thermodynamic phases are developed at one side of the overflow plate 3a, typically interface between water and hydrocarbon liquids and interface between hydrocarbon liquids and gases.

A level controller 15 may be coupled to the separator 3 to monitor the built-up of one or more of the interface layers 3b. The level controller 15 may also be configured to regulate one or more of the interface layer 3b at a stable position.

For example, the height of the water layer relative to the height of the overflow plate 3a may be set at 75 % or 80 % or 85 %, while the layer comprising both the water layer and the hydrocarbon layer situated on top of the water layer may be set at 90 % or 95 % or 100 %.

The ratios of hydrocarbons building up within the separator 3 depend inter alia on the amount of flare gas / multi-phase stream entering therein. If the interface / condensate layer 3b becomes too high, make-up water is introduced into the separator via the make-up water inlet(s) 32a, thereby creating an overflow across the overflow plate(s) 3a.

The level controller 15 may for example be based on radar type measurements.

Other applications of the level controller 15 may also be foreseen, see description below.

After a complete separation of the flare gas into the desired thermodynamic phases, the separated fluids are discharged through respective outlets 23b,24b,30b,31b and into individual lines 23,24,30,31.

Note that a thermodynamic phase is herein defined chemically and physically uniform or homogeneous quantity of matter that can be separated mechanically from a nonhomogeneous mixture and that may consist of a single substance or a mixture of substances. See f.ex. https://www.britannica.com/science/phase-state-of-matter.

In the particular embodiments shown in Figs. 1 and 3, the upper part of the separator 3 comprises a first stage outlet 23b for discharging separated fluid (herein referred to as a first stage fluid) into a main gas line 23. After completed separation, the first stage fluid is composed mostly of gas (e.g. more than 90 % gas), and typically mostly natural gas. A typical pressure and a typical temperature of the first stage fluid within the main gas line 23 is 12 bar and 40°C, respectively.

In order to allow monitoring of the overall pressure within the separator 3, a separator pressure sensor 41 may be connected to, or installed at or within, the separator 3. In the particular embodiment of Fig. 1, the pressure sensor 41 is installed such as to measure the pressure on the upper, gaseous section of the separator 3.

As indicated in Fig. 3, a demister separator 44 may be installed at or downstream the first stage outlet 23b, thereby allowing demisting of gas or gaseous fluid in to the main gas line 23. The demister separator can be a demister pad, a vane demister package and/or a cyclonic demister package. Such a demister separator 44 may prove useful due to the high amount of motive fluid B in form of water applied to the ejector 2, and thus the risk of experiencing a corresponding high amount of water downstream the membrane system 7.

At or downstream the first stage outlet 23b, the main gas line 23 is split into a return line 22 set in fluid communication with the ejector 2 and a membrane line 37 set in fluid communication with a membrane system 7.

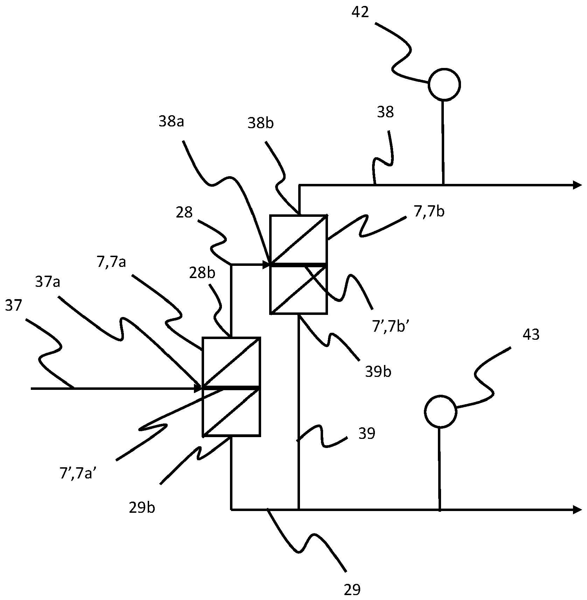

A small fraction of the first stage fluid may enter the return line 22 (hereinafter referred to as a return fluid) which is further guided into the ejector 2 through a dedicated ejector inlet or the same ejector inlet 20a as the inlet for the flare gas. Figs. 1 and 2 depict the latter exemplary configuration.

The flow of the return fluid within the return line 22 may be controlled by a back-flow valve 14, e.g. a pressure valve, installed at or downstream the junction between the main gas line 23, the return line 22 and the membrane line 37.

Furthermore, the flow of the return fluid may be monitored by a process variable controller 16 such as a pressure indicator controller. Such controller may be connected directly or indirectly to a monitoring line in signal communication with the flare line 20 and the back-flow valve 14 to allow control of inter alia the flow rate within the return line 22 as function of inter alia the flow rate within the flare line 20. Hence, any fluctuations in the flare gas flow within the flare line 20 may be monitored by the process variable controller 16, and the back-flow valve 14 may be regulated to compensate the flow within the return line 22 accordingly.

The operation of the ejector 2 increases the pressure of a fluid from an initial pressure *Pᵢ* when entering the ejector inlet 20a (for example between 0 to 0.6 bar above atmospheric pressure) to an outlet pressure *Pₒ* at an ejector outlet 27b (for example between 10-16 bar).

A typical pressure and a typical temperature of the pressurized fluid discharged from the ejector outlet 27b is 12 bar and 40°C, respectively.

Typical pressures of the first stage fluid within the return line 22 is within 0 bar and 0.2 bar. A typical temperature is around 40°C.

The larger fraction of the first stage fluid entering the membrane line 37 (typically all or nearly all of the fluid discharged from the first stage outlet 23b) is further guided into the membrane system 7 via a membrane inlet 37a. The pressure of the first stage fluid in the membrane line 37 should be high enough to ensure efficient separation by the membrane system, preferably between 8 and 20 bar, more preferably between 10 and 16 bar, for example at 12 bar. A typical temperature of the first stage fluid entering the membrane system is 40°C.

The membrane system 7 comprises an enclosed space containing a membrane 7' dividing the space into two sectional chambers: a gas section comprising a second stage gas outlet 28b and a liquid section comprising a second stage liquid outlet 29b. The gas discharged from the second stage gas outlet 28b is guided through a second stage gas discharge line 28 to a gas receiving unit 8. Further, the liquid discharged from the second stage liquid outlet 29b is guided through a second stage liquid discharge line 29 to a liquid receiving unit 9.

The membrane 7' may be of any type allowing separation of the first stage fluid into gas(es) and liquid(s), in particular into natural gas(es) and natural gas liquid(s). One example of such a membrane is the membrane Puramem^{®} VOC delivered by the company Evonik Corporation.

As shown in Fig. 1, a second stage gas pressure sensor 42 and/or a third stage liquid pressure sensor 43 may be installed on the second stage gas discharge line 28 and the second stage liquid discharge line 29, respectively, to allow monitoring of the pressure downstream the membrane system 7.

Hence, by combining pressure measurement within the separator 3 by use of the separator pressure sensor 41 and pressure measurement downstream the membrane system 7 by use of the second stage gas pressure sensor 42 and/or the second stage liquid pressure sensor 43, continuous or discrete monitoring of the pressure difference across the membrane system 7 is possible. This further allows monitoring of any change in performance of the membrane system 7 for example due to degradation and/or failure. Any pressure fluctuations in the pressure difference would indicate a technical problem with the membrane system 7.

The pressure difference measurement also allows for setting up and implementing protective measures in case of uncontrolled pressure increase upstream the membrane system 7. Examples of protective measures may be closing the flare line valve 21 and/or the motive fluid valve 6 and/or shutting down the motive fluid recirculation pump 4. Typically all of said measures are performed in case of unforeseen pressure rise.

The flare recovery system may comprise a plurality of membrane systems 7a,7b, each comprising a membrane 7a',7b', thus achieving a further increase the separation efficiency of the second stage gas and the second stage liquid.

Fig. 3 shows an example with two membrane systems 7a,7b. The first stage fluid is initially separated into a second stage gas and a second stage liquid by the first membrane 7a' constituting part of the first membrane system 7a. The second stage gas discharged from the second stage gas outlet 28b into the second stage gas discharge line 28 is further guided into the second membrane system 7b via a second stage gas inlet 38a. At least some residual liquid(s) within the second stage gas is then separated out by the second membrane 7b' constituting part of the first membrane system 7b, thus achieving a further purification. The additionally separated second stage gas (referred to as the third stage gas) is discharged from a third stage gas outlet 38b into a third stage gas discharge line 38. The residual liquid separated from the second stage gas (referred to as the third stage liquid) is discharged from a third stage liquid outlet 29b into a third stage liquid discharge line 39. As illustrated in Fig. 3, this third stage liquid may then be mixed with the second stage liquid flowing in the second stage liquid discharge line 28.

In case of two membrane systems 7a,7b, the second stage gas pressure sensor 42 may advantageously be installed to measure the pressure within the third stage gas discharge line 38. Gas pressure sensors installed both on the second stage gas discharge line 28 and the third stage gas discharge line 38 may also be envisaged.

The phase separator may be a separator known in the art, for example a separator as described in the publication SPE-207483-MS, Society of Petroleum Engineers, "Elimination of Tight Emulsions" (Haakon Ellingsen et al, 2021). Note however that reference is made to the part of the publication describing the separator vessel in general, not to the overall system.

Again with reference to Figs. 1 and 3, the separator 3 may further include
- one or more motive fluid outlets 24b for discharge of a motive fluid into a pump input line 24, in particular a liquid such as water,
- one or more liquid hydrocarbon outlets 30b for discharge of separated heavy hydrocarbons into a heavy hydrocarbon line 30 in fluid communication with a heavy hydrocarbon receiving unit 10,
- one or more drainage outlets 31b for discharge of separated drainage water into a drainage line 31 in fluid communication with a drainage system 12 and
- one or more make-up inlets 32a for guiding water make up from a make-up water unit 13, via a make-up water line 32, and into the separator 3.

The make-up inlet(s) 32a and the drainage outlet(s) 31b is/are located on the side of the overflow plate(s) 3a with the interface layers 3b and the level controller 1, while the liquid hydrocarbon outlet(s) 30b is/are located on the opposite side of the overflow plate(s) 3a.

In Figs. 1 and 3, a heavy hydrocarbon valve 11 is shown installed on the heavy hydrocarbon line 30 to allow control of the flow of heavy hydrocarbons to the heavy hydrocarbon receiving unit 10. However, a configuration where dedicated valve(s) is/are installed at the outlet(s) 31b for drainage water may also be envisaged. Furthermore, one or more dedicated valves may be installed on the make-up water line 32, thereby controlling the flow of make-up water going into the separator 3 via make-up water inlet(s) 32a.

In the particular embodiment shown in Fig. 1, the separator 3 comprises a separate outlet 31b for drainage water and a separate inlet 32a for water make-up. However, as seen in the embodiment of Fig. 3, the inlet 32a for make-up water and the outlet 31b for drainage water may be discharged / entered from / into the same opening 31b. Further, the desired amount of make-up water entering the separator 3 may be controlled by a dedicated make-up water valve 33 controlling the flow into the drainage line 31.

A recirculation pump 4 is arranged at the end of the pump input line 24 to increase the pressure of the motive fluid to a predetermined motive fluid pressure *P_{mf}* before entering an ejector input line 26 in fluid communication with a motive fluid inlet 26a of the ejector 2. *P_{mf}* is set sufficiently high to at least ensure efficient separation within the membrane system(s) 7,7a,7b, typically between 100 bar and 200 bar.

Furthermore, a motive fluid valve 6 may be installed on the ejector input line 26 (as seen in Figs. 1 and 2) and/or the pump input line 24 to allow control of the motive fluid flow between the separator 3 and the ejector 2. The motive fluid valve 6 may for example be a controllable level valve.

The motive fluid may be guided through a cooler 5 cooling its temperature prior to entering the recirculation pump 4, thereby avoiding an undesirable temperature increase due to heat dissipation from operating equipment such as the recirculation pump 4. One advantage of keeping the motive fluid B at a controlled low temperature (for example less than 45°C) is that the vapor pressure of the gases within the separator 3 is maintained below a threshold value, thereby improving the ejector system performance. Furthermore, the heavy hydrocarbon evaporation is prevented or limited. Also, the temperature of the fluids permeating the membrane(s) of the membrane system is kept at an acceptable membrane operating temperature, for example at or around 50°C.

The motive fluid typically experiences a pressure drop within the cooler, for example from 12 bar to 11.3 bar.

Note that the cooling of the motive fluid may also, or alternatively, take place within the separator 3, for example by use of a cooling coil.

Moreover, the cooler 5 may in addition, or alternatively, be placed downstream the recirculation pump 4.

Moreover, the cooler 5 may in addition, or alternatively, be placed downstream the recirculation pump 4 and circulated in a separate process line back to the separator 3.

The cooler 5 shall herein be interpreted as any means capable of performing a controlled cooling of the motive fluid B. For example, the cooler 5 may include an external cooling liquid source in fluid communication with the separator 3 and/or the pump input line 24 and/or the ejector input line 26 and/or the recirculation pump 4. Furthermore, the cooling liquid may be obtained partly or fully from the drainage line 31 and/or the make-up water line 32.

As mentioned above, a level indicator / level controller 15 may be coupled to the tank of the separator 3 to measure interface levels of fluids within the separator's tank having different thermodynamic phases. Examples of level indicators that may be used in the flare gas recovery system are transparent level indicators, level indicators, radar type indicators, ultrasonic type indicators, reflex level indicators, magnetic level indicators or a combination thereof.

The level indicator 15 may be set in signal communication with other components of the flare gas recovery system to render automatic control of the operation as function of the level indicator readings possible. In Figs. 1 and 3, the level indicator 15 is set in signal communication with the motive fluid valve 6. However, other valves such as valves controlling the liquid hydrocarbons (LNG), the drainage water and/or the make-up water may be set in such signal communications with the level indicator 15 to increase the degree of automation.

Typical 3-phase separators used in flare gas recovery systems are dimensioned to tolerate pressures far below the pressures of the motive fluid intended for this particular system, wherein. As mentioned above, such motive fluid pressure may reach approximately 150 bar.

In normal operation, the pressure at the ejector outlet 27b is reduced to about 6-10 % of the pressure at the motive fluid inlet 26a. In one exemplary operation, the pressure at the motive fluid inlet 26a is 150 bar, the pressure at the ejector inlet 20a is 0.2 bar and the pressure at the ejector outlet 27b is 12 bar.

It is therefore considered advantage to introduce additional protective measures to eliminate, or at least significantly reduce, the risk of accidents in case of a system failure which may result in that a significant part of the pressure at the motive fluid inlet 26a enters the separator 3.

In Fig. 1, such protective measure comprises the above mentioned separator pressure sensor 41 monitoring the pressure inside the separator 3 and a pressure activated valve 40 (typically a commercially available pressure relief valve (PRV) or a pressure safety valve (PSV)) configured to open when the pressure inside the separator 3 exceeds a threshold pressure. Such threshold pressure is typically set to be 1.5 times the maximum operating pressure of the separator 3, and may be 18 or 20 bar. The pressure activated valve 40 may be installed in direct fluid communication with the inside volume of the separator 3 as shown in Fig. 1.

If the separator 3 is dimensioned for maximum operation pressures at the motive fluid inlet 26a, for example by manufacturing the separator vessel with sufficiently thick walls as indicated in Fig. 3, the above-mentioned protective measures may be omitted.

In case of activation of the pressure activated valve 40, the released fluid flow is typically discharged into the flare line 20.

A regular operation of the system may be summarized as follows:
The flare gas (which may be a mixture of liquid and gas, see above) is guided into the ejector 2, typically at a pressure of around 0,2 bar gauge, and further guided into the separator 3 at an elevated pressure of around 12 bar gauge, wherein the flare gas is separated into thermodynamic phases. The phases may be water, hydrocarbon liquids and hydrocarbon gases.
The elevation of the pressure from 0.2 bar to 12 bar is achieved within the ejector 2 by injecting a motive fluid (preferably water or any other liquid with a density at or close to the density of water) into the motive fluid inlet 26a separate from the ejector inlet 20a at a pressure significantly higher than the pressure at the ejector outlet 27b, typically 150 bar.
The motive fluid is extracted as a separated thermodynamic phase from the separator 3 through a motive fluid outlet 24b.

To achieve the desired pressure *P_{mf},* the motive fluid is pressurized by a recirculation pump 4 prior to entering the ejector 2, alternatively a plurality of recirculation pumps 4 in parallel and/or series. In general, the desired motive fluid pressure *P_{mf}* is a pressure high enough to increase the pressure of added gas (such as the gas from the return line 22 and/or the flare line 20) from an initial pressure *Pᵢ* to a workable output pressure *Pₒ* that allows successful operation of the flare gas recovery system. A typical gauge pressure of the motive fluid pressure *P_{mf}* upstream and downstream the recirculation pump(s) 4 is 11.3 bar and 150 bar, respectively.

Downstream the circulation pump 4, the motive fluid is further guided through an ejector input line 26 and into the ejector 2 via the motive fluid inlet 26a.

The ejector 2 pressurizes the incoming fluid (i.e. the return fluid and/or the flare gas) to a level that allows continuous separation of hydrocarbon(s) and water from first stage gas within the separator 3, as well as allowing continuous and efficient performance of the downstream membrane system(s) 7,7a,7b.

With the above described configuration, the motive fluid is recirculated in a closed loop scheme. An antifoam agent / defoamer may be injected at the pump inlet 24a to hinder / reduce formation of foam in the motive fluid.

In the inventive system and related method, the recirculation pump(s) 4 is/are the only rotating equipment, which represent one advantage over existing flare gas recovery systems which typically relies on energy demanding and complex compressors.

The first stage fluid guided to the downstream membrane system(s) 7,7a separates the first stage fluid into natural gas liquid(s) (NGL(s)) and natural gas(es).

Hence, two main streams are collected from the membrane system 7 as a result of the two or more separation steps:
- stabilized natural gas in which heavy hydrocarbons (i.e. hydrocarbons with molecular formula with two or more carbon atoms) have been removed or significantly reduced and
- natural gas liquid(s) in which gas(es) have been removed or significantly reduced.

Due to its purity, the stabilized natural gas may be sold as compressed natural gas (CNG) quality with required specification. In order to valorize the natural gas further, supplementary number of membrane systems 7b may be added.

The natural gas liquid(s) may be sold in the form discharged from the membrane system(s) and/or used within the relevant installation / facility as a power source, for example to run turbines (thereby generating electricity) and/or to deliver energy directly to furnaces, burners, etc.

If a shut-down of the system is required, the following steps may be performed:
- The flare line valve 21 is closed.
- The recirculation pump 4 is turned off.
- Any problem causing the decision of shut-down is fixed.
- The recirculation pump 4 is turned on causing the motive fluid B to start circulating.
- The flare line valve 21 is opened allowing flare gas A to again flow into the ejector 2.

As for the method steps performed during regular operations, these shut-down steps may also be fully or partly automized through the common control system.

All of the command signals from/to control components within the system (e.g. between process variable controller 16 and the back-flow valve, between the level controller 15 and the motive fluid valve 6, between the separator pressure sensor 41 and the motive fluid valve 6, between the second stage gas pressure sensor 42 and the flare line valve 21, between the second stage liquid pressure sensor 43 and the flare line valve 21 and between the pressure activated valve 40 and the flare line valve 21) are preferably transmitted via a PLC 50.

In the preceding description, various aspects of the flare gas recovery system and the associated method have been described with reference to the illustrative embodiment. For purposes of explanation, specific numbers, systems and configurations were set forth in order to provide a thorough understanding of the system and their workings. However, this description is not intended to be construed in a limiting sense. Various modifications and variations of the illustrative embodiment, as well as other embodiments of the system or method, which are apparent to persons skilled in the art to which the disclosed subject matter pertains, are deemed to lie within the scope of the present invention.

**Reference numerals:**

| | |
|---|---|
| 1 | Flare gas source / flare header |
| 2 | Ejector / liquid ejector |
| 3 | Separator / 3 phase separator |
| 3a | Overflow plate / weir plate |
| 3b | Interface layer |
| 4 | Motive fluid recirculation pump |
| 5 | Cooler |
| 6 | Motive fluid valve |
| 7 | Membrane system |
| 7a | First membrane system |
| 7b | Second membrane system |
| 7' | Membrane |
| 7a' | First membrane |
| 7b' | Second membrane |
| 8 | Gas receiving unit |
| 9 | Liquid receiving unit |
| 10 | Heavy hydrocarbon receiving unit |
| 11 | Heavy hydrocarbon valve |
| 12 | Drainage system |
| 13 | Make-up water unit / reservoir |
| 14 | Back-flow valve / pressure valve |
| 15 | Level controller / level indicator |
| 16 | Process variable controller / pressure indicator controller |
| 20 | Flare line |
| 20a | Mixed stream inlet / ejector inlet |
| 21 | Flare line valve / XY Valve / Emergency shutdown (ESD) valve |
| 22 | First stage gas return line / return line |
| 23 | First stage return line / main gas line |
| 23b | First stage outlet |
| 24 | Third motive fluid line / pump input line |
| 24a | Pump inlet |
| 24b | First separator outlet / motive fluid outlet |
| 26 | Third motive fluid line / ejector input line |
| 26a | Motive fluid inlet |
| 27 | Ejector discharge line |
| 27a | Separator inlet |
| 27b | Ejector outlet |
| 28 | Second stage gas discharge line |
| 28b | Second stage gas outlet / gas outlet |
| 29 | Second stage liquid discharge line |
| 29b | Second stage liquid outlet / liquid outlet |
| 30 | Heavy hydrocarbon line |
| 30b | Heavy hydrocarbon outlet |
| 31 | Drainage line |
| 31b | Drainage outlet |
| 32 | Make-up water line |
| 32a | Make-up water inlet |
| 33 | Make-up water valve |
| 34 | Second stage pressure reducing valve |
| 37 | Membrane line |
| 37a | Membrane inlet |
| 38 | Third stage gas discharge line |
| 38a | Second stage gas inlet |
| 38b | Third stage gas outlet |
| 39 | Third stage liquid discharge line |
| 39b | Third stage liquid outlet |
| 40 | Pressure activated valve / pressure safety valve (PSV) / pressure relief valve (PRV) |
| 41 | Separator pressure sensor |
| 42 | Second stage gas pressure sensor |
| 43 | Second stage liquid pressure sensor |
| 44 | Demister separator |
| 50 | Control system / programmable logic controller (PLC) |
| *Pₒ* | Outlet pressure (gauge) |
| *P_{o,abs}* | Outlet pressure (absolute) |
| *Pᵢ* | Initial pressure (gauge) |
| *P_{i,abs}* | Initial pressure (absolute) |
| *P_{mf}* | Motive fluid pressure (gauge) |
| *P_{mf,abs}* | Motive fluid pressure (absolute) |
| *Pₘ* | Membrane pressure (gauge) |
| *P_{m.abs}* | Membrane pressure (absolute) |
| *A* | Multi-phase stream / flare gas |
| *B* | Motive fluid |
| *C* | Mixed stream |
| *D* | First stage fluid |
| *E* | Gas fraction |
| *F* | Liquid fraction |

## Claims

1. A flare gas recovery system comprising:
- a flare gas source (1) for discharging a multi-phase stream (A),
- a separator (3) configured to at least partly separate thermodynamic phases, the separator (3) comprising
- a separator inlet (27a),
- a first separator outlet (24b) for discharging a motive fluid (B) separated from a mixed stream (C) comprising the multi-phase stream (A) and
- a first stage outlet (23b) for discharging a first stage fluid (D) separated from the mixed stream (C), wherein the first stage fluid (D) has a thermodynamic phase different from the motive fluid (B),
- an ejector (2) comprising:
- a motive fluid inlet (26a) configured to receive the motive fluid (B) discharged from the first separator outlet (24b) of the separator (3);
- a mixed stream inlet (20a) in fluid communication with the flare gas source (1), the mixed stream inlet (20a) being configured to receive the multi-phase stream (A); and
- an ejector outlet (27b) in fluid communication with the separator inlet (27a), wherein the ejector outlet (27b) is configured to discharge fluid comprising the motive fluid (*B*) and the multi-phase stream (*A*) at an absolute outlet pressure *P_{o,abs}* being between an absolute inlet pressure *P_{i,abs}* at the mixed stream inlet (20a) and an absolute motive fluid pressure *P_{mf,abs}* at the motive fluid inlet (26a),
- a motive fluid recirculation pump (4) configured to raise the pressure of the motive fluid (B) discharged from the first separator outlet (24b) to the motive fluid pressure *P_{mf}* at the motive fluid inlet (26a) and
- a membrane system (7,7a) in fluid communication with the first stage outlet (23b), the membrane system (7) comprising:
- a membrane (7') configured to at least partly separate a gas fraction and a liquid fraction of the first stage fluid (D),
- a second stage gas outlet (28b) arranged on a gas side of the membrane (7') for discharging the gas fraction (E) and
- a second stage liquid outlet (29b) arranged on a liquid side of the membrane (7') for discharging the liquid fraction (F).

2. The flare recovery system in accordance with claim 1, wherein the system further comprises
- a motive fluid valve (6) configured to control flow of the motive fluid (B) to the motive fluid inlet (26a) of the ejector (2).

3. The flare recovery system in accordance with any one of the preceding claims, wherein the motive fluid recirculation pump (4) is programmable and that the system further comprises
- a level controller (15) configured to sense a level of the motive fluid (B) inside the separator (3) and to send an instruction signal to the motive fluid recirculation pump (4) with instruction to regulate the flow of the motive fluid (B) to the desired motive fluid pressure *P_{mf}* based on the sensed motive fluid level.

4. The flare recovery system in accordance with claim 3, wherein the level controller (15) is configured to regulate the absolute motive fluid pressure *P_{mf,abs}* to be at least 120 times the absolute inlet pressure *P_{i,abs}.*

5. The flare recovery system in accordance with any one of the claims,
wherein the mixed stream inlet (20a) is also in fluid communication with the first stage outlet (23b) and
wherein the system further comprises
- a back-flow valve (14) configured to control flow of the first stage fluid (D) from the first stage outlet (23b) to the mixed stream inlet (20a).

6. The flare recovery system in accordance with any one of the preceding claims, wherein the system further comprises
- cooler (5) for cooling the motive fluid discharged from the separator (3) prior to entering the ejector (2).

7. The flare recovery system in accordance with any one of the preceding claims, wherein the system further comprises
- a second membrane system (7b) in fluid communication with the gas fraction outlet (28b) of the membrane system (7a), the second membrane system (7b) comprising:
- a second membrane (7b') configured to further separate at least partly a residual liquid fraction from the gas fraction,
- a third stage gas outlet (38b) arranged on a gas side of the second membrane (7b') for discharging a remaining gas fraction after separation by the second membrane (7b') and
- a third stage liquid outlet (39b) arranged on a liquid side of the second membrane (7b') for discharging the residual liquid fraction.

8. The flare recovery system in accordance with any one of the preceding claims, wherein the system further comprises
- a pressure relief valve (40) coupled to the separator (3) to maintain the pressure within the separator (3) below a threshold pressure.

9. The flare recovery system in accordance with any one of the preceding claims, wherein the system further comprises
- a separator pressure sensor (41) configured to measure the pressure within the separator (3).

10. The flare recovery system in accordance with any one of the preceding claims, wherein the system further comprises at least one of
a second stage gas pressure sensor (42) configured to measure the pressure downstream the second stage gas outlet (28b) and
a second stage liquid pressure sensor (43) configured to measure the pressure downstream the second stage liquid outlet (29b).

11. A method for recovering flare gas using a flare recovery system in accordance with any one of the preceding claims, wherein the method comprises the following steps:
A: passing the mixed stream (C) discharged from the ejector (7) into the separator (3) via the separator inlet (27a);
B: separating the mixed stream (C) into the motive fluid (B) and the first stage fluid (D) by use of the separator (3);
C: passing the motive fluid (B) into the ejector (2) via the first separator outlet (24b) and the motive fluid inlet (26a) while operating the motive fluid recirculation pump (4) to maintain a pressure of the motive fluid (B) at the motive fluid inlet (26a) at at least the absolute motive fluid pressure *P_{mf,abs};*
D: passing the multi-phase stream (A) discharged from the flare gas source (1) into the ejector (2) via the mixed stream inlet (20a);
E: discharging the first stage fluid (D) from the separator (3) via the first stage outlet (23b);
F: passing at least a fraction of the first stage fluid (D) discharged from the separator (3) into the membrane system (7,7a) via one or more membrane inlets (35a);
G: passing any remaining fraction of the first stage fluid (D) into the ejector (2);
H: separating the at least fraction of the first stage fluid (D) into a second stage gas and a second stage liquid by letting the at least fraction of the first stage fluid (D) penetrate through the membrane (7');
I: discharging the second stage gas via the second stage gas outlet (28b) arranged on one side of the membrane (7');
J: discharging the second stage liquid via the second stage liquid outlet (29b) arranged on the side of the membrane opposite of the second stage gas outlet (28b); and
K: controlling the absolute motive fluid pressure *P_{mf,abs}* by regulating at least the motive fluid recirculation pump (4) to a pressure allowing separation of the second stage gas and the second stage liquid within the membrane system (7,7a).

12. The method in accordance with claim 11, wherein a ratio between the fraction of the first stage fluid (D) entering the membrane system (7,7a) and the remaining fraction entering the ejector (2) is regulated by one or more back-flow valves (14).

13. The method in accordance with claim 11 or 12, wherein step K further comprises
- regulating a motive fluid valve (6) configured to control flow of the motive fluid (B) to the motive fluid inlet (26a) of the ejector (2).

14. The method in accordance with any one of claims 11-13, wherein the absolute motive fluid pressure *P_{mf,abs}* and the absolute inlet pressure *P_{i,abs}* is adjusted to, and maintained at, pressure levels ensuring that the outlet pressure *Pₒ* remains above 9 bar.

15. The method in accordance with any one of claims 11-14, wherein in step K the absolute motive fluid pressure *P_{mf,abs}* is controlled such that a pressure ratio between the absolute outlet pressure *Pₒ,_{abs}* and the absolute inlet pressure *P_{i,abs}* is at least 6.
